## Europäisches Patentamt

## European Patent Office

## Office européen des brevets

(11) Veröffentlichungsnummer: **0 154 138 B1**

(12) # EUROPÄISCHE PATENTSCHRIFT

(45) Veröffentlichungstag der Patentschrift:
**11.05.88**

(51) Int. Cl.⁴: **C 08 J 3/00**, C 08 L 55/02, C 08 L 25/12

(21) Anmeldenummer: **85100639.5**

(22) Anmeldetag: **23.01.85**

(54) ABS-Formmassen mit verbessertem Brandverhalten und Verfahren zu ihrer Herstellung.

(30) Priorität: **04.02.84 DE 3403975**

(43) Veröffentlichungstag der Anmeldung:
**11.09.85 Patentblatt 85/37**

(45) Bekanntmachung des Hinweises auf die Patenterteilung:
**11.05.88 Patentblatt 88/19**

(84) Benannte Vertragsstaaten:
**BE DE FR GB IT NL**

(56) Entgegenhaltungen:
EP - A - 0 131 751
FR - A - 2 174 049
US - A - 3 940 455
US - A - 4 355 126

(73) Patentinhaber: **BAYER AG, Konzernverwaltung RP Patentabteilung, D-5090 Leverkusen 1 Bayerwerk (DE)**

(72) Erfinder: **Zabrocki, Karl, Dr., Edelfalter 33, D-4044 Büttgen (DE)**
Erfinder: **Lindner, Christian, Dr., Riehler Strasse 200, D-5000 Köln 41 (DE)**
Erfinder: **Bosshammer, Hubert, Ing.-grad., Klosterstrasse 112, D-5000 Köln 41 (DE)**
Erfinder: **Urbannek, Bernd, Högden 15, D-4050 Mönchengladbach 2 (DE)**

ACTORUM AG

## Beschreibung

Die Erfindung betrifft flammfeste ABS-Formmassen, die neben üblichen Flammschutzadditiven ein fluororganisches Polymer enthalten.

ABS-Formmassen im Sinne der Erfindung sind Zweiphasenkunststoffe aus:

I. einem oder mehreren thermoplastischen Copolymerisaten aus Styrol und Acrylnitril, wobei das Styrol ganz oder teilweise durch α-Methylstyrol, kernsubstituierte Styrole, Methylmethacrylat, Maleinsäureanhydrid oder gegebenenfalls substituiertes Maleinimid ersetzt werden kann. Dieses Copolymerisat, auch als SAN-Harz oder Matrix-Harz bezeichnet, bildet die äussere kontinuierliche Phase;

II. mindestens einem Pfropfpolymerisat, welches hergestellt worden ist durch Pfropfreaktion eines oder mehrerer der unter I. genannten Monomeren auf ein kautschukartiges Polymer («Pfropfgrundlage»). Dieses Pfropfpolymerisat, auch «Elastomerphase» oder «Pfropfkautschuk», bildet die disperse diskontinuierliche Phase.

ABS-Formmassen werden in grossem Umfang zur Herstellung von Formteilen, z.B. Kfz-Innenteilen, Gebrauchsgegenständen und Gehäusen z.B. für Büromaschinen verwendet. Ein Nachteil ist ihre Brennbarkeit, die ihre Anwendung für thermisch beanspruchte Teile einschränkt. Zur Erhöhung der Flammfestigkeit hat man Flammschutzadditive, z.B. Antimonoxid, halogenhaltige Aromaten wie Octabromdiphenylether, Pentabromphenylbenzoat zugesetzt, jedoch wird hierdurch das Abtropfen beim Brennen nicht ausreichend vermindert.

Aus der US-A-4355126 ist bekannt, dass man das Abtropfen beim Brandversuch von mit Flammschutzadditiven ausgerüsteten ABS-Formmassen durch den Zusatz von Polytetrafluorethylen deutlich vermindern kann. Die durch konventionelles Mischen hergestellten Formmassen sind jedoch wenig brauchbar, weil deren Oberflächenqualität sowie mechanische Eigenschaften für viele Anwendungen nicht ausreichen (Mikrorisse und Schlierenbildung).

Gegenstand der Erfindung sind ABS-Formmassen aus

I. 95—35 Gew.-Teilen eines oder mehrerer Matrix-Harze

II. 5—65 Gew.-Teilen eines oder mehrerer Pfropfpolymerisate

III. 0,05—0,5 Gew.-Teilen eines Tetrafluorethylenpolymerisats

IV. 0—8 Gew.-% (bezogen auf I + II + III) eines anorganischen Synergisten zur Flammschutz-Verbesserung

V. 0—25 Gew.-% (bezogen auf I + II + III) mindestens einer organischen Halogenverbindung, die dadurch gekennzeichnet sind, dass zu ihrer Herstellung eine wässrige Dispersion der Komponente III mit einem Latex der Komponente II oder einem Latex der Komponente I oder einem Latexgemisch der Komponenten I und II vermischt, das Polymergemisch durch Koagulation isoliert und gegebenenfalls anschliessend mit weiterem Pfropfpolymerisat und/oder Halzpolymerisat sowie mit den Komponenten IV und V in an sich bekannter Weise gemischt wird.

Die Komponente I

Matrix-Harze im Sinne der Erfindung sind thermoplastische Copolymerisate aus Styrol und Acrylnitril, wobei das Styrol ganz oder teilweise ersetzt werden kann durch α-Methylstyrol, kernalkylierte und kernhalogenierte Styrole, Methylmethacrylat, Maleinsäureanhydrid, gegebenenfalls substituiertes Maleinimid, und das Acrylnitril ganz oder teilweise durch Methacrylat ersetzt werden kann.

Die Copolymerisate besitzen bevorzugt Molgewichte von ca. $2 \times 10^4$ bis $2 \times 10^5$ und können hergestellt werden nach üblichen Polymerisationstechniken, wobei die radikalische Massepolymerisation und die Emulsionspolymerisation bevorzugt sind.

Bevorzugte Copolymerisate sind binäre und ternäre Polymerisate aus Styrol/Acrylnitril, α-Methylstyrol/Acrylnitril, Styrol/Acrylnitril/Methylmethacrylat, Styrol/Acrylnitril/N-Phenylmaleinimid, p-Methylstyrol/Acrylnitril, p-Methylstyrol/Acrylnitril/N-Phenylmaleinimid.

Besonders bevorzugt sind Copolymerisate aus 60—80 Gew.-Teilen Styrol bzw. α-Methylstyrol und 20—40 Gew.-Teilen Acrylnitril.

Die Komponente II

Pfropfpolymerisate im Sinne der Erfindung sind Produkte, die entstehen, wenn mindestens eines der unter I aufgeführten Monomeren in Gegenwart eines kautschukartigen, bevorzugt Doppelbindungen enthaltenden Polymeren («Pfropfgrundlage») polymerisiert wird. Bevorzugt stellt man derartige Pfropfpolymerisate durch Emulsionspolymerisation her, bei der als Pfropfgrundlage Latices kautschukartiger Polymerer mit mittleren Teilchendurchmessern $d_{50}$ von 0,1—2 µm verwendet werden; mittlere Teilchendurchmesser $d_{50}$ können mit der Ultrazentrifuge gemäss W. Scholtan, H. Lange: Kolloid. Z. und Z. für Polymere 250 (1972), 782—96 bestimmt werden.

Die Zusammensetzung der Pfropfpolymerisate liegt im Bereich von 8—80, insbesondere 20—60 Gew.-% Pfropfgrundlage und 92—20, insbesondere 80—40 Gew.-% in deren Gegenwart polymerisierter Monomerer.

Als Pfropfgrundlage verwendet man vorzugsweise Dienkautschuke wie Polybutadien und Acrylatkautschuk wie Polybutylacrylat oder entsprechende Copolymere z.B. aus Butadien/Butylacrylat, Styrol/Butadien oder Acrylnitril/Butadien.

Die Pfropfpolymerisate können hergestellt werden, indem man die Monomeren bzw. das Monomer (z.B. Styrol und Acrylnitril) radikalisch in wässriger Emulsion auf die als wässrige Emulsion vorliegenden, teilchenförmigen Kautschuke pfropfcopolymerisiert. Die dabei anfallenden Pfropfcopolymerisate können gegebenenfalls mit phenolischen Antioxidatien stabilisiert, isoliert und weiterverarbeitet werden. Erfindungsgemäss geeignet sind auch Pfropfpolymerisate von Styrol und Acrylnitril auf Acrylatkautschuke, die sich von $C_1$–$C_{10}$-Alkylacrylaten als Monomere ableiten, insbesondere von n-Butylacrylat, Hexylacrylat, Ethylhexylacrylat und Ethylacrylat. Die als Pfropfbasis für Styrol und Acrylnitril geeigneten Acrylatkautschuke können Comonomere wie Styrol, Vinylether, Butadien, Methylmethacrylat oder Vinylacetat in Mengen bis zu 40 Gew.-% eincopolymerisiert enthalten. Diese Acrylatkautschuke sind wenigstens partiell vernetzt und können hergestellt werden durch radikalische Emulsionspolymerisation entsprechender Monomermischungen, gegebenenfalls in Gegenwart polyfunktioneller, als Vernetzer wirkender ethylenisch ungesättigter Monomerer, wie Divinylbenzol, Alkylenglykoldi-(meth)acrylate, Triallylisocyanurat, Polyetherglykoldi(meth)acrylate. Diese Pfropfpolymerisate enthalten bevorzugt 8–80 Gew.-% Acrylatkautschuk, insbesondere 20–60 Gew.-%.

Besonders bevorzugt sind Styrol-Acrylnitril-Pfropfpolymerisate auf Acrylatkautschukteilchen mit Kern-Mantel-Struktur, wie sie z.B. in EP-A-34748 beschrieben sind, sowie Styrol-Acrylnitril-Pfropfpolymerisate auf Polybutadien.

Die Komponente III

Erfindungsgemäss geeignete Tetrafluoroethylenpolymerisate besitzen Fluorgehalte von 65–76 Gew.-%, vorzugsweise 70–76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Solche Polymerisate sind bekannt aus «Vinyl and Related Polymers», John Wiley & Sons, Inc., New York, 1952, Seite 484–494; «Fluorpolymers», Wiley-Interscience, New York, 1972; «Encyclopedia of Polymer Science and Technology», Interscience Publishers, New York, Band 13, 1970, Seite 623–654; «Modern Plastics Encyclopedia», 1970–1971, Band 47, Nr. 10A, Oktober 1970 McGraw-Hill, Inc., New York, Seite 134, 138 und 774; «Modern Plastics Encyclopedia», 1975–1976, Oktober 1975, Band 52, Nr. 10A, McGraw-Hill, Inc., New York, Seite 27, 28 und 472 und US-A-3671487, 3723373 und 3838092.

Die Komponente IV

Als anorganischer Synergist zur Flammfest-Verbesserung kommen Oxide und Carbonate von Metallen der V. Hauptgruppe in Betracht wie $Sb_2O_3$, $Sb_2(CO_3)_3$, $Bi_2O_3$, $Bi_2(CO_3)_3$. Man setzt sie in Mengen von bis zu 8 Gew.-%, bevorzugt 3–6 Gew.-% (bezogen auf I + II + III) dem Polymergemisch zu.

Die Komponente V

Als organische Halogenverbindungen können übliche Flammschutzadditive, insbesondere niedermolekulare Bromverbindungen eingesetzt werden. Beispiele sind Octabromdiphenylether, Tetrabromphthalimid, Tribromphenoximethan, Bis(tribromphenoxi)ethan, Tris(tribromphenyl)triphosphat, Trichlortetrabromtoluol, Hexabromcyclododecan, Decabromdiphenylether. Man setzt die Komponente V in Mengen bis 25 Gew.-% bevorzugt 14–22 Gew.-% (bezogen auf I + II + III) zu.

Die erfindungsgemässen Formmassen können hergestellt werden, indem man zuerst eine wässrige Emulsion (Latex) eines Pfropfpolymerisates mit mittleren Latexteilchendurchmessern ($d_{50}$) von 0,1–2 μm, insbesondere 0,2–0,6 μm, mit einer feinteiligen Dispersion eines Tetrafluorethylenpolymerisates mit mittleren Dispersionsteilchendurchmessern ($d_{50}$) von 0,05–20 μm, insbesondere von 0,08–10 μm im angegebenen Mengenverhältnis mischt; geeignete Tetrafluorethylen-Dispersionen besitzen Feststoffgehalte von 30–70 Gew.-%, insbesondere von 50–60 Gew.-%. Anschliessend kann die Dispersionsmischung in an sich bekannter Weise aufgearbeitet werden, z.B. durch Koagulation mittels Zusatz von anorganischen oder organischen Salzen, Säuren, Basen oder organischen, mit Wasser mischbaren Lösungsmitteln wie Alkoholen, Ketonen, vorzugsweise bei Temperaturen von 20–150 °C, insbesondere von 50–100 °C. Falls erforderlich, kann nach einer Wäsche bei 50–200 °C, bevorzugt bei 70–100 °C getrocknet werden.

Liegen die thermoplastischen Polymerisate I als Latex vor, dann können die Tetrafluorethylenpolymerisate (in Form ihrer feinteiligen Dispersion) auch damit gemischt, aufgearbeitet, und das Gemisch zur Herstellung der Formmassen eingesetzt werden.

Desgleichen ist es möglich, Latexgemische aus den Komponenten I und II mit den Dispersionen der Komponente III zu vermischen.

Die auf den geschilderten Wegen erhaltenen Mischungen der Komponenten I, II und III können in üblichen Mischern wie Knetern, Extrudern, Walzen, Schnecken mit den Komponenten IV und V vermischt werden.

Dabei oder danach können zusätzlich übliche Hilfs- und Zusatzstoffe wie Gleitmittel, Oxidationsschutzmittel, Antistatika, Farbmittel oder dergleichen nach Bedarf eingearbeitet werden.

Die erfindungsgemässen Massen können vorzugsweise nach den Methoden der Thermoplastverarbeitung wie Granulierung, Spritzguss, Extrusion, Kalandrierung, Pressung, Blasverformung weiterverarbeitet werden. Sie zeichnen sich aus durch geringe Abtropfneigung beim Brennen, bei gleichzeitig hervorragender Oberflächenqualität sowie guten mechanischen und thermischen Eigenschaften.

**Patentansprüche**

1. ABS-Formmassen bestehend aus
I. 95–35 Gew.-Teilen eines oder mehrerer thermoplastischer Copolymerisate aus Styrol und Acrylnitril, wobei das Styrol ganz oder teilweise ersetzt werden kann durch α-Methylstyrol, kernalkylierte und kernhalogenierte Styrole, Methylmethacrylat, Maleinsäureanhydrid, gegebenenfalls substituiertes Maleinimid, und das Acrylnitril ganz oder teilweise durch Methacrylnitril ersetzt werden kann.

II. 5–65 Gew.-Teilen eines oder mehrerer Pfropfpolymerisate,

III. 0,05–0,5 Gew.-Teilen eines Tetrafluorethylenpolymerisats,

IV. 0–8 Gew.-% (bezogen auf I + II + III) eines anorganischen Flammschutzsynergisten,

V. 0–25 Gew.-% (bezogen auf I + II + III) einer organischen Halogenverbindung,

dadurch gekennnzeichnet, dass zu ihrer Herstellung eine wässrige Dispersion der Komponente III mit einem Latex der Komponente II oder einem Latex der Komponente I oder einem Latexgemisch der Komponenten I und II vermischt, das Polymergemisch durch Koagulation isoliert, und gegebenenfalls anschliessend mit weiterem Pfropfpolymerisat und/oder Copolymerisat sowie mit den Komponenten IV und V in an sich bekannter Weise gemischt wird.

2. ABS-Formmassen gemäss Anspruch 1, dadurch gekennzeichnet, dass als Komponente I ein Styrol/Acrylnitril-Copolymer oder ein α-Methyl-Styrol/Acrylnitril-Copolymer aus 60–80 Gew.-Teilen Styrol oder α-Methyl-Styrol und 20–40 Gew.-Teilen Acrylnitril verwendet wird.

3. ABS-Formmassen gemäss Anspruch 1, dadurch gekennzeichnet, dass als Komponente II ein Pfropfpolymerisat von Styrol/Acrylnitril auf Polybutadien verwendet wird.

4. ABS-Formmassen gemäss Anspruch 1, dadurch gekennzeichnet, dass als Komponente III ein Tetrafluorethylenpolymerisat mit einem Fluorgehalt von 70–76 Gew.-% verwendet wird.

5. Verfahren zur Herstellung flammwidriger ABS-Formmassen gemäss Anspruch 1, dadurch gekennzeichnet, dass man -

A) eine wässrige Emulsion der Komponente I mit einer wässrigen Dispersion der Komponente III und gegebenenfalls einer wässrigen Emulsion der Komponente II vermischt,

B) aus dieser Mischung die Polymeren isoliert und trocknet und

C) gegebenenfalls das so erhaltene Gemisch mit weiterem Pfropfpolymerisat II und/oder Harzpolymerisat I sowie den Additiven IV und V und gegebenenfalls weiteren Additiven vermischt.

## Claims

1. ABS moulding materials consisting of 95–35 parts by weight of one or more thermoplastic copolymers of styrene and acrylonitrile, where the styrene can be partly or completely replaced by α-methylstyrene, styrenes which are alkylated or halogenated in the nucleus, methyl methacrylate, maleic anhydride, optionally substituted maleimide, and where the acrylonitrile can be partly or completely replaced by methacrylonitrile,

II. 5–65 parts by weight of one or more graft polymers,

III. 0.05–0.5 parts by weight of a tetrafluorethylene polymer,

IV. 0–8% by weight (based on I + II + III) of an inorganic flameproofing synergist, and

V. 0–25% by weight (based on I + II + III) of an organic halogen compound, characterized in that, for their preparation, an aqueous dispersion of component III is mixed with a latex of component II or a latex of component I or a latex mixture of components I and II, the polymer mixture is isolated by coagulation and, if appropriate, then mixed in a conventional manner with further graft polymer and/or copolymer and with components IV and V.

2. ABS moulding materials according to Claim 1, characterized in that a styrene/acrylonitrile copolymer or an α-methylstyrene/acrylonitrile copolymer comprising 60–80 parts by weight of styrene or α-methylstyrene and 20–40 parts by weight of acrylonitrile is used as component I.

3. ABS moulding materials according to claim 1, characterized in that a graft polymer of styrene/acrylonitrile on polybutadiene is used as component II.

4. ABS moulding materials according to claim 1, characterized in that a tetrafluoroethylene polymer with a fluorine content of 70–76% by weight is used as component III.

5. Process for the preparation of flame-repellent ABS moulding materials according to claim 1, characterized in that A) an aqueous emulsion of component I is mixed with an aqueous dispersion of component III and, if appropriate, an aqueous emulsion of component II, B) the polymers are isolated from this mixture and dried, and C), if appropriate, the mixture thus obtained is mixed with further graft polymer II and/or resin polymer I and the additives IV and V and, if appropriate, further additives.

## Revendications

1. Matières à mouler à base d'ABS, constituées.

I. de 95 à 35 parties en poids d'un ou plusieurs copolymères thermoplastiques dérivés de styrène et d'acrylonitrile, le styrène pouvant être remplacé en totalité ou en partie par l'α-méthylstyrène, des styrènes alkylés et halgénés sur le noyau, le méthacrylate de méthyle, l'anhydride d'acide maléique, le maléimide éventuellement substitué, et l'acrylonitrile pouvant être remplacé en totalité ou en partie par le méthacrylonitrile,

II. de 5 à 65 parties en poids d'un ou plusieurs polymères greffés,

III. de 0,05 à 0,5 partie en poids d'un polymère de tétrafluoréthylène,

IV. de 0 à 8% en poids (par rapport à la somme de I + II + III) d'un agent synergique inorganique retardateur de flamme,

V. de 0 à 25% en poids (par rapport à la somme de I + II + III) d'un composé organique halogéné, caractérisées en ce qu'on mélange, pour leur préparation, une dispersion aqueuse du composant III avec un latex du composant II ou un latex du composant I ou un mélange de latex des composants I et II, on isole le mélange de polymères par coagulation puis, le cas échéant, on le mélange d'une manière connue avec une quantité additionnelle de polymère de greffage et/ou de copolymère de même qu'avec les composants IV et V.

2. Matières à mouler à base d'ABS suivant la revendication 1, caractérisées en ce qu'on utilise comme composant I un copolymère styrène/acrylonitrile ou un copolymère α-méthylstyrène/acrylonitrile constitué de 60 à 80 parties en poids de styrène ou d'α-méthylstyrène et de 20 à 40 parties en poids d'acrylonitrile.

3. Matières à mouler à base d'ABS suivant la revendication 1, caractérisées en ce qu'on utilise comme composant II un polymère de greffage de styrène/acrylonitrile sur du polybutadiène.

4. Matières à mouler à base d'ABS suivant la revendication 1, caractérisées en ce qu'on utilise comme composant III un polymère de tétrafluoréthylène ayant une teneur en fluor de 70 à 76% en poids.

5. Procédé de production de matières à mouler à base d'ABS résistant à la flamme suivant la revendication 1, caractérisé en ce que:

A) on mélange une émulsion aqueuse du composant I avec une dispersion aqueuse du composant III et, le cas échéant, une émulsion aqueuse du composant II,

B) on isole les polymères de ce mélange et on les sèche et

C) on ajoute, le cas échéant, au mélange ainsi obtenu, une quantité additionnelle de polymère greffé II et/ou de résine polymérique I ainsi que les additifs IV et V et, le cas échéant, d'autres additifs.